# EUROPÄISCHE PATENTANMELDUNG

(11) **EP 1 806 168 A1**
(43) Veröffentlichungstag der Anmeldung: **11.07.2007**
(21) Anmeldenummer: 06000140.1
(22) Anmeldetag: 04.01.2006
(51) Int. Cl.: B01D 29/44, F01D 25/32

(54) **Dampfsieb**

(71) Anmelder: SIEMENS AKTIENGESELLSCHAFT, 80333 München (DE)
(72) Erfinder: Geist, Richard, 91207 Lauf (DE); Höne, Bernd, 90409 Nürnberg (DE); Pfeffer, Gerhard, 90461 Nürnberg (DE)

(57) **Zusammenfassung**

Die Erfindung betrifft ein Dampfsieb (1). Das Dampfsieb (1) weist einen Grundkörper (2) auf. Der Grundkörper (2) weist eine Wandung (3) auf, an deren einer Seite (4, 7) bezogen auf eine Hochachse (X) Quernuten (6) und an der dazu gegenüber liegenden Seite (4, 7) bezogen auf die Hochachse Längsnuten (8) angeordnet sind. Die Erfindung betrifft aber auch ein Verfahren zur Herstellung des Dampfsiebs (1).

## Beschreibung

Die Erfindung betrifft ein Dampfsieb. Die Erfindung betrifft aber auch ein Verfahren zur Herstellung eines Dampfsiebes.

Derartige Dampfsiebe sind bekannt. Bevorzugterweise werden die bekannten Dampfsiebe in Schnellschlussventilen von Dampfturbinen bzw. Strömungsmaschinen eingebaut, um die Dampfturbine bzw. die Strömungsmaschine vor Verunreinigungen und/oder Fremdkörpern aus einem Frischdampfnetz zu schützen.

Derzeit sind unterschiedliche Bauformen von Dampfsieben bekannt. Zum einen wird ein bekanntes Dampfsieb als Wickelsieb nach der so genannten "Görlitzer Bauart" hergestellt, wobei das Dampfsieb aus profilierten Blechstreifen auf einer geeigneten Vorrichtung über einen Käfig gewickelt wird. Des Weiteren ist ein Lochsieb nach der so genannten "Nürnberger Bauart" bekannt, wobei das Dampfsieb aus einem gebohrten, bevorzugt 8 mm dicken Lochblech gebogen und anschließend zusammengeschweißt wird. Weiter ist ein Spaltsieb nach der so genannten "Finspong Bauart" bekannt, bei der das Dampfsieb aus einer Vielzahl von gefäßten Blechstreifen in einer geeigneten Vorrichtung zusammengeschweißt wird.

Bei den zuvor genannten unterschiedlichen Bauformen ist als Hauptnachteil anzusehen, dass die bekannten Dampfsiebe in einer Vielzahl von Herstellungsschritten hergestellt werden müssen, die zudem äußerst kostenintensiv sind. Insbesondere bei dem Wickel- und Lochsieb sind sehr hohe Druckverluste zu beobachten, die sich nachteilig auf die Leistung der Dampfturbine bzw. der Strömungsmaschine auswirken. Nachteilig ist weiterhin, dass die bekannten Dampfsiebe aus einer Vielzahl von Bauelementen hergestellt werden, wobei die Dampfsiebe insbesondere den in den Dampfturbinen bzw. Strömungsmaschinen vorherrschenden Belastungen beispielsweise Schwingungsbelastungen ausgesetzt sind, so dass insbesondere die Schweißnähte des Lochsiebes bzw. des Spaltsiebes die vorherrschenden Belastungen nicht ertragen, so dass das Dampfsieb nachteiligerweise nach einer relativ kurzen Einsatzzeit zerstört werden könnte.

Der vorliegenden Erfindung liegt die Aufgabe zugrunde, ein Dampfsieb der eingangs genannten Art mit einfachen Mitteln dahin gehend zu verbessern, dass dieses kostengünstiger herstellbar ist, wobei das erfindungsgemäße Dampfsieb die vorherrschenden Belastungen in der Dampfturbine bzw. der Strömungsmaschine erträgt, ohne vorzeitig zerstört zu werden.

Erfindungsgemäß wird die Aufgabe durch ein Dampfsieb gelöst, das einen Grundkörper mit einer Wandung aufweist, an deren einer Seite bezogen auf eine Hochachse Quernuten und an der dazu gegenüber liegenden Seite bezogen auf die Hochachse Längsnuten angeordnet sind.

Günstig im Sinne der Erfindung ist hierbei, wenn der Grundkörper einstückig hergestellt ist, wobei die Wandung, im Querschnitt gesehen, vorzugsweise als Kreisring ausgestaltet ist. Natürlich kann die Wandung auch andere geeignete Querschnittsformen aufweisen. Vorteilhafterweise wird somit ein rohrförmiger Grundkörper zur Verfügung gestellt, der einstückig aus einem geeigneten Material gefertigt ist, wobei an den sich gegenüber liegenden Seiten der Wandung die entsprechenden Nuten angeordnet sind.

Zweckmäßigerweise sind die Quernuten an der Innenseite der Wandung angeordnet, wobei die Quernuten günstigerweise über mehr als die Hälfte der Wandstärke der Wandung in diese eingebracht sind.

Vorteilhaft im Sinne der Erfindung ist, wenn die Quernuten in Hochrichtung gesehen zueinander beabstandet sind, wobei zwischen den Quernuten Querstege angeordnet sind.

Zweckmäßig im Sinne der Erfindung ist, wenn in Hochrichtung gesehen jeweils zu Stirnseiten der Wandung nächstliegende Quernuten einen größeren Abstand zu den jeweiligen Stirnseiten in Hochrichtung gesehen aufweisen als die Quernuten jeweils zu benachbarten Quernuten.

Günstigerweise sind die Längsnuten an der zur Innenseite gegenüber liegenden Außenseite der Wandung angeordnet, wobei die Längsnuten bezogen auf die Quernuten breiter ausgeführt sind.

Vorteilhaft im Sinne der Erfindung ist vorgesehen, dass die Längsnuten jeweils zu Stirnseiten der Wandung orientierte Kopf- bzw. Fußbereiche aufweisen, die abgerundet sind, wobei die Längsnuten mit ihren Kopf- bzw. Fußbereichen und in ihren zwischen diesen angeordneten Mittelbereichen derart tief in die Wandung eingebracht sind, dass die Quernuten geöffnet sind. Vorzugsweise weisen die Längsnuten eine Tiefe auf, die der Hälfte der Wandstärke entspricht.

Somit wird insgesamt ein Dampfsieb zur Verfügung gestellt, das in einfacher Weise aus einem rohrförmigen Grundkörper gebildet ist, der an der Innenseite seiner Wandung bzw. an seinem Innenumfang Quernuten für einen Dampfaustritt aufweist, wobei an der dazu gegenüber liegenden Außenseite der Wandung bzw. an seinem Außenumfang die Längsnuten zur Bildung von Dampfdurchtrittöffnungen angeordnet sind. Somit ist das erfindungsgemäße Dampfsieb sehr einfach herstellbar, wodurch insbesondere Kosteneinsparungen bei der Herstellung des erfindungsgemäßen Dampfsiebes erzielbar sind. Weiter weist das erfindungsgemäße Dampfsieb geringere Druckverluste auf als beispielsweise die eingangs genannten Wickel- bzw. Lochsiebe. Dadurch, dass das Dampfsieb lediglich aus einem Teil besteht bzw. aus einem einstückigen Grundkörper hergestellt ist, ist das Dampfsieb bei den vorherrschenden Belastungen in der Dampfturbine bzw. in den Strömungsmaschinen festigkeitsmäßig sehr gut beherrschbar.

Das erfindungsgemäße Dampfsieb eignet sich insbesondere zur Verwendung in Schnellschlussventilen von Dampfturbinen bzw. Strömungsmaschinen, um die Dampfturbine bzw. die Strömungsmaschine vor Verunreinigungen und/oder Fremdkörpern aus einem Frischdampfnetz zu schützen.

Die Lösung der Aufgabe gelingt erfindungsgemäß aber auch durch ein Verfahren zur Herstellung eines Dampfsiebes, welches einen Grundkörper mit einer Wandung aufweist, an deren einer Seite bezogen auf eine Hochachse Quernuten und auf der dazu gegenüber liegenden Seite bezogen auf die Hochachse Längsnuten eingebracht werden.

Günstig im Sinne der Erfindung ist, wenn an dem rohrförmigen Grundkörper bzw. an seiner Innenseite seiner Wandung bzw. an seinem Innenumfang die Quernuten für einen Dampfaustritt gedreht werden, wobei anschließend an der dazu gegenüber liegenden Außenseite bzw. an dem Außendurchmesser der Wandung bevorzugt mit einem Formfräser mehrere Längsnuten für die Dampfdurchtrittsöffnungen gefräst werden.

Die Quernuten werden von der Innenseite der Wandung über etwas mehr als die Hälfte der Wandstärke in Richtung zur Außenseite eingebracht, wobei zwischen den in Hochrichtung gesehen einander beabstandeten Quernuten Querstege verbleiben. Die Längsnuten werden von der Außenseite der Wandung in Richtung zur Innenseite in die Wandung eingebracht, wobei die Längsnuten bevorzugt bis zu Hälfte der Wandstärke in die Wandung eingebracht werden. Hierdurch entstehen Öffnungen, da die Quernuten mit ihrem Nutgrund über die Hälfte der Wandstärke eingebracht sind, so dass ein anschließendes einbringen der Längsnuten den Nutgrund der Quernuten entfernt, so dass die Quernuten von der Innenseite zur Außenseite geöffnet sind. Die Öffnungen sind natürliche derart dimensioniert, dass die Dampfturbine bzw. die Strömungsmaschine vor Verunreinigungen und/oder Fremdkörpern geschützt ist.

Weitere vorteilhafte Ausgestaltungen der Erfindung sind in den Unteransprüchen und der folgenden Figurenbeschreibung offenbart. Es zeigen:
- Fig. 1: ein Dampfsieb in einer perspektivischen Ansicht,
- Fig. 2: einen Querschnitt durch das Dampfsieb aus Figur 1,
- Fig. 3: eine Seitenansicht des Dampfsiebes aus Figur 1 mit der Einzelheit X aus Figur 2, und
- Fig. 4: eine weitere Ausführung der Quernuten als Einzelheit.

In den unterschiedlichen Figuren sind gleiche Teile stets mit denselben Bezugszeichen versehen, so dass diese in der Regel auch nur einmal beschrieben werden.

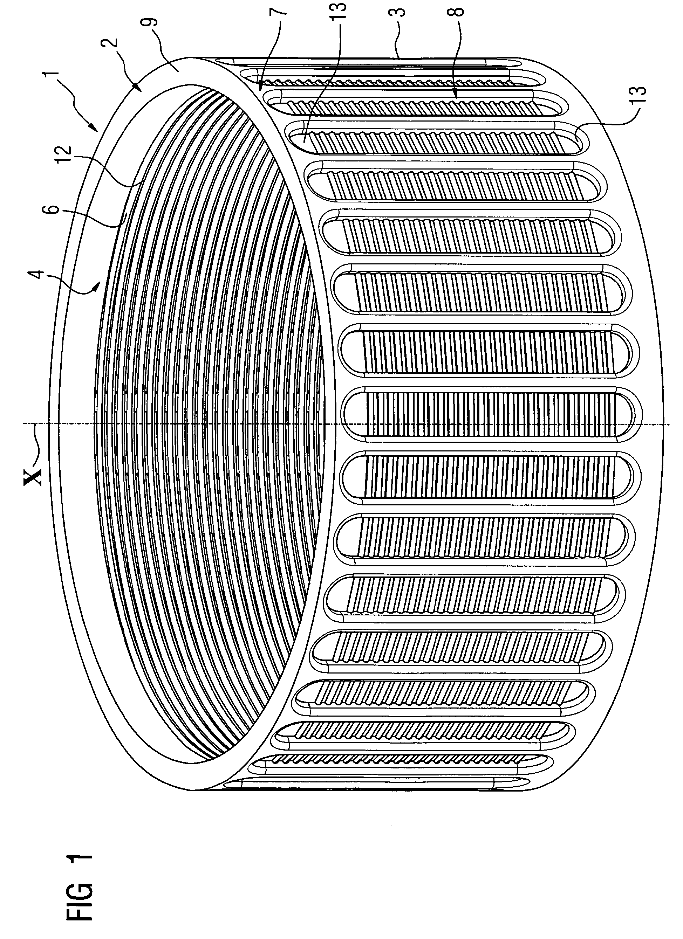

Figur 1 zeigt ein Dampfsieb 1, das einen Grundkörper 2 aufweist. Der Grundkörper 2 weist eine Wandung 3 auf, an deren einer Seite 4, die im Folgenden als Innenseite 4 bezeichnet wird, bezogen auf eine Hochachse X Quernuten 6 und an der dazu gegenüber liegenden Seite 7, die im Folgenden als Außenseite 7 bezeichnet wird, bezogen auf die Hochachse X Längsnuten 8 angeordnet sind. Die Hochachse X stellt gleichzeitig eine Mittelachse X des Grundkörpers 2 dar, und bestimmt dessen Hochrichtung.

In dem dargestellten Ausführungsbeispiel ist das Dampfsieb 1 aus einem einstückigen Grundkörper 2 hergestellt, der eine rohrförmige Ausgestaltung aufweist.

Die Quernuten 6 sind als Ringnuten konzentrisch um die Hochachse X bzw. um die Mittelachse X an der Innenseite 4 bzw. an dem Innenumfang der Wandung 3 eingebracht, wobei die Quernuten 6 vorzugsweise von der Innenseite 4 in Richtung zur Außenseite 7 in den Grundkörper 2 eingedreht werden. Selbstverständlich kann zur Herstellung der Quernuten 6 aber auch jedes andere geeignete Verfahren verwendet werden.

Die Wandung 3 ist in dem dargestellten Ausführungsbeispiel, im Querschnitt gesehen, als Kreisring ausgeführt, so dass ein rohrförmiger Grundkörper 2 gebildet ist.

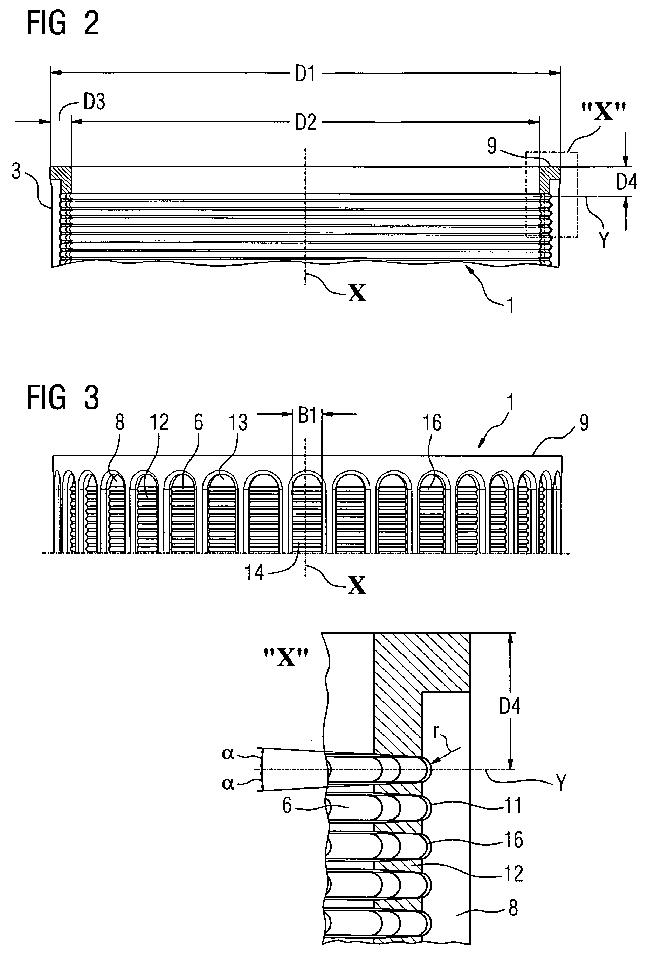

In dem dargestellten Ausführungsbeispiel weist der Grundkörper 2 einen Außendurchmesser D1 auf, der in dem bevorzugten Ausführungsbeispiel einen Betrag von 270 mm aufweist, wobei der Grundkörper 2 einen Innendurchmesser D2 von 250 mm aufweist, so dass sich eine Wandstärke D3 der Wandung 3 von 10 mm ergibt (Fig. 2).

In den Figuren 2 und 3 ist jeweils eine Hälfte des Dampfsiebs 1 weggeschnitten.

Das erfindungsgemäße Dampfsieb 1 eignet sich insbesondere zur Verwendung in Schnellschlussventilen von Dampfturbinen bzw. Strömungsmaschinen, um die Dampfturbine bzw. Strömungsmaschine vor Verunreinigungen und/oder Fremdkörpern aus einem Frischdampfnetz zu schützen. Selbstverständlich kann der Grundkörper 2 daher natürlich auch andere als die zu dem bevorzugten Ausführungsbeispiel genannten Maße aufweisen und insbesondere an unterschiedliche Abmaße von Schnellschlussventilen angepasst ausgeführt sein.

Der Figur 2 ist zu entnehmen, dass in Hochrichtung X gesehen jeweils zu Stirnseiten 9 der Wandung 3 nächstliegenden Quernuten 6 einen größeren Abstand zu den jeweiligen Stirnseiten 9 aufweisen als die Quernuten 6 jeweils zu benachbarten Quernuten 6. In dem dargestellten Ausführungsbeispiel beträgt ein Abstand D4 einer Mittellinie Y der zu der Stirnseite 9 nächstliegenden Quernut 6 beispielsweise 18 mm, wobei hier natürlich auch andere Maße gewählt werden können.

Wie der Figur 3 zu entnehmen ist, sind die Quernuten 6 über mehr als die Hälfte der Wandstärke D3 der Wandung 3 in diese eingebracht.

In dem dargestellten Ausführungsbeispiel sind die Quernuten 6 von der Innenseite 4 drehtechnisch in den Grundkörper 2 eingebracht, wobei ein Nutgrund 11 der Quernuten 6 die Hälfte der Wandstärke 3 in Richtung zur Außenseite 7 etwas überragt. Der Drehgrund 11 ist hierbei bevorzugt verrundet ausgeführt, wobei ein Innenradius mit einem Betrag r=1.25 gewählt wird, wobei hier selbstverständlich auch andere Radien gewählt werden können.

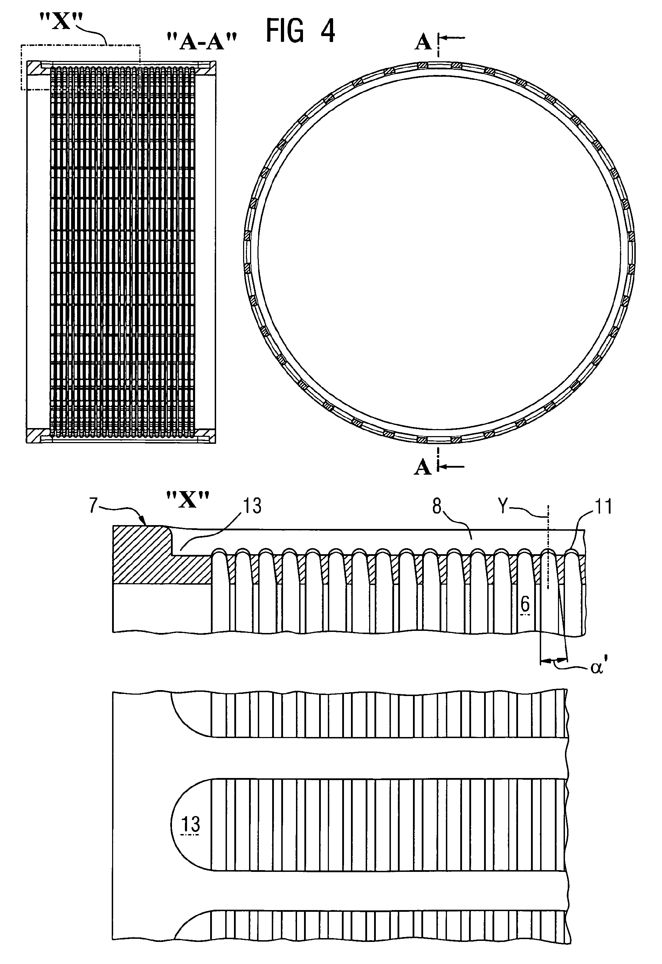

Wie bereits beschrieben, sind die einander beabstandeten Quernuten 6 in Hochrichtung X gesehen zueinander beabstandet, wobei zwischen den Quernuten 6 Querstege 12 angeordnet sind. Jeweilige Flanken der Querstege 12 sind mit einem Steigungswinkel α von bevorzugt 3° ausgeführt, wobei die Flanken bezogen auf die Mittelachse Y derart orientiert sind, dass sich die Quernuten 6 von der Innenseite 4 in Richtung zur Außenseite 7 verjüngen. Bei dem in Figur 2 dargestellten Ausführungsbeispiel sind beide Quernutwände mit einem Steigungswinkel α versehen. Bei dem in Figur 4 dargestellten Ausführungsbeispiel weist eine der Wandungen den Steigungswinkel α in einem zum Nutgrund 11 orientierten Wandabschnitt auf, so dass dieser Wandabschnitt sich konusförmig verdickend in Richtung zum Nutgrund 11 ausgeführt ist. Der dazu gegenüberliegende Wandabschnitt ist geradlinig verlaufend ausgeführt. Bevorzugter Weise weisen die sich beiden gegenüberliegenden Wandabschnitte bei beiden Ausgestaltungen nach den Figuren 3 und 4 einen Öffnungswinkel α' von 6° auf, wobei natürlich auch andere geeignete Winkelbeträge wählbar sind.

Die Längsnuten 8 sind an der Außenseite 7 der Wandung 3 angeordnet. Bezogen auf die Quernuten 6 sind die Längsnuten 8 breiter ausgeführt, wobei die Längsnuten 8 einen Kopf- bzw. Fußbereich 13 und einen zwischen diesen angeordneten Mittelbereich 14 aufweisen. Der Mittelbereich 14 weist in dem dargestellten Ausführungsbeispiel eine Breite B1 von bevorzugt 16 mm auf.

Die Kopf- bzw. Fußbereich 13 der Längsnuten 8 sind jeweils zu den Stirnseiten 9 orientiert und abgerundet ausgeführt, so dass die Kopf- bzw. Fußbereiche 13 im Wesentlichen halbkreisförmig ausgeführt sind. Den Figuren 1 und 4 ist zu entnehmen, dass die Längsnuten 8 sowohl im Kopf- bzw. Fußbereich 13 als auch im Mittelbereich 14 in Richtung zur Außenseite 7 hin angefasst, quasi verrundet ausgeführt sind. Im Bereich der Kopf- bzw. Fußbereiche 13 sind keine Quernuten 6 eingebracht. Die Längsnuten 8 sind derart tief in die Wandung 3 eingebracht, dass die Quernuten 6 geöffnet sind, wobei die Kopf- bzw. Fußbereiche 13 geschlossen sind. Dies bedeutet, dass die Längsnuten 8 bis zu einer Hälfte der Wandstärke D3 der Wandung 3 eingebracht sind, so dass bei der Herstellung der Längsnuten 8 der jeweilige Nutgrund 11 der Quernuten 6 entfernt wird, so dass die Quernuten 6 von der Innenseite 4 in Richtung zur Außenseite 7 aufgrund der Längsnuten 8 geöffnet sind. In dem dargestellten Ausführungsbeispiel sind die Längsnuten 8 von der Außenseite 7 in Richtung zur Innenseite 4 mit einer Tiefe von 5mm in die Wandung 3 eingebracht.

Zur Herstellung des erfindungsgemäßen Dampfsiebes wird nun bevorzugt wie folgt vorgegangen:

In den rohrförmigen Grundkörper 2 werden an der Innenseite 4 bzw. an seinem Innenumfang die Quernuten 6 für einen Dampfaustritt maschinentechnisch gedreht. Anschließend werden an der dazu gegenüber liegenden Außenseite 7 bzw. an dem Außenumfang des rohrförmigen Grundkörpers 2 mit einem Formfräser mehrere Längsnuten 8 für Dampfdurchtrittöffnungen gefräst, wobei der Nutgrund 11 entfernt wird, so dass die Öffnungen 16 gebildet sind.

## Patentansprüche

1. Dampfsieb,
**gekennzeichnet durch**
einen Grundkörper (2),
der eine Wandung (3) aufweist,
an deren einer Seite (4, 7) bezogen auf eine Hochachse (X) Quernuten (6) und an der dazu gegenüber liegenden Seite (4, 7) bezogen auf die Hochachse (X) Längsnuten (8) angeordnet sind.

2. Dampfsieb nach Anspruch 1,
**dadurch gekennzeichnet, dass**
der Grundkörper (2) einstückig ausgeführt ist,
wobei die Wandung (3) als Kreisring ausgeführt ist.

3. Dampfsieb nach Anspruch 1 oder 2,
**dadurch gekennzeichnet, dass**
die Quernuten (6) an der Innenseite (4) der Wandung angeordnet sind.

4. Dampfsieb nach einem der vorhergehenden Ansprüche,
**dadurch gekennzeichnet, dass**
die Quernuten (6) über mehr als die Hälfte der Wandstärke (D3) der Wandung (3) in diese eingebracht sind.

5. Dampfsieb nach einem der vorhergehenden Ansprüche,
**dadurch gekennzeichnet, dass**
die Quernuten (6) in Hochrichtung gesehen zueinander beabstandet sind,
wobei zwischen den Quernuten (6) Querstege (12) angeordnet sind.

6. Dampfsieb nach einem der vorhergehenden Ansprüche,
**dadurch gekennzeichnet, dass**
in Hochrichtung gesehen jeweils zu Stirnseiten (9) der Wandung (3) nächstliegende Quernuten (6) einen größeren Abstand (D4) zu den jeweiligen Stirnseiten (9) aufweisen als die Quernuten (6) jeweils zu beabstandeten Quernuten (6).

7. Dampfsieb nach einem der vorhergehenden Ansprüche,
**dadurch gekennzeichnet, dass**
die Längsnuten (8) an der Außenseite (7) der Wandung (3) angeordnet sind.

8. Dampfsieb nach einem der vorhergehenden Ansprüche,
**dadurch gekennzeichnet, dass**
die Längsnuten (8) bezogen auf die Quernuten (6) breiter ausgeführt sind.

9. Dampfsieb nach einem der vorhergehenden Ansprüche,
**dadurch gekennzeichnet, dass**
die Längsnuten (8) jeweils zu Stirnseiten (9) der Wandung (3) orientierte Kopf- bzw. Fußbereiche (13) aufweisen, die abgerundet sind, wobei die Längsnuten (8) mit ihrem Kopf- bzw. Fußbereich (13) und einem zwischen dem Kopf- bzw. Fußbereich (13) angeordneten Mittelbereich (14) derart tief in die Wandung (3) eingebracht sind, dass die Quernuten (6) geöffnet sind, wobei die Kopf- bzw. Fußbereiche (13) geschlossen sind.

10. Verfahren zur Herstellung eines Dampfsiebes (1), insbesondere nach einem der vorhergehenden Ansprüche,
**gekennzeichnet durch**
einen Grundkörper (2), der eine Wandung (3) aufweist, an deren einer Seite (4, 7) bezogen auf eine Hochachse (X) Quernuten (6) und an der dazu gegenüber liegenden Seite (4, 7) bezogen auf die Hochachse Längsnuten (8) eingebracht werden.
